# EUROPEAN PATENT APPLICATION

(11) **EP 2 063 614 A1**
(43) Date of publication of application: **27.05.2009**
(21) Application number: 08020057.9
(22) Date of filing: 18.11.2008
(51) Int. Cl.: H04M 1/2745

(54) **Communication terminal device, access controlling method, and smart card**

(30) Priority: 22.11.2007 JP 2007302556
(71) Applicant: NTT DoCoMo, Inc., Chiyoda-ku Tokyo 100-6150 (JP)
(72) Inventor: Ishikawa, Hidetoshi, Tokyo 100-6150 (JP)
(74) Representative: Henseler, Daniela

(57) **Abstract**

Telephone directory information retained by a user identity module (UIM) is accessed in an efficient manner. A representative telephone directory DS is defined in a UIM. When registration information of a registered record X is read out, a search request is issued from a cellular phone to search Record Number 1 in the representative telephone directory DS for the registered record X. Then, a read-out request is issued to read out Record Number 1 of the representative telephone directory DS. The UIM, upon receipt of the search request, searches the telephone directory for a record storing the registered record X, associates the record with Record number 1 of the representative telephone directory, and then match the data of the records. When a read-out request is issued, the data of the record is read out from Record Number 1 of the representative telephone directory.

## Description

The present invention relates to a communication terminal, a communication terminal device having an external memory medium that communicates with the communication terminal, an access controlling method in the communication terminal device, and a smart card.

In recent years, a system has been proposed in which a given cellular phone service was served by a cellular phone service provider, by attaching a user identity module (UIM) that is attachable to a user's cellular phone, such as a Universal Subscriber Identity Module (USIM) or Subscriber Identity Module (SIM). Specifically, UIMs can be issued by both network operators and cellular phone service providers.

The UIM stores a user identification number relating to a cellular phone service, personal information of the user, telephone directory, and other information. This allows a single user to use multiple cellular phones, by attaching an identical UIM to different cellular phones. Conversely, this allows multiple users to share a single cellular phone, by attaching each of the UIMs of multiple users to a single cellular phone.

The memory area in the UIM; however, is generally smaller than the memory area in a cellular phone.

For this reason, a technique has been proposed in which the memory area that can be managed in association with individual identification numbers of multiple UIMs is arranged within the cellular phone, so that a larger memory area can be provided to multiple users (as described in JP 2004-336719 A, for example). Another technique has been proposed in which the memory area is arranged on a network instead of within a cellular phone, so that multiple cellular phones can share information (as described in JP 2007-60231 A, for example).

However, in the above-described method in which the memory area is arranged in a cellular phone for each UIM, there are following drawbacks. Specifically, as compared to an Integrated Circuit (IC) chip with a high security function (tamper resistance) constituting a UIM, a memory IC chip generally used for a cellular phone or the like has low security. Therefore, there is a risk that the memory IC chip within the cellular phone is analyzed and the stored information is read out by a third party.

In addition, in order to carry out the method for providing information between multiple cellular phones via a network, the communication establishment is essential for sharing the information. Accordingly, when the cellular phone is out of the range of service, or when the cellular phone is not capable of communicating depending on the environment, the above function cannot be utilized. Besides, even if the communication is enabled, the usability is changed depending on the communication rate. Therefore, it takes time to acquire the information, thereby giving uncomfortable feeling to users, in many cases.

On the other hand, the memory IC chips with a high security function each constituting a UIM have relatively reasonable prices these days. This enables more information to be stored in the UIM.

At present, by satisfying the version 11.11 or version 31.102 of Technical Specifications (TS) standardized by the Third Generation Partnership Project (3GPP), it is possible to create 254 registrations in a telephone directory in a SIM or 254 or more registrations in a telephone directory in a USIM.

In such a telephone directory having a great number of registrations, it takes time to access the telephone directory. For this reason, a method has been proposed in which at the time of powering on the cellular phone, the entire data of the telephone directory stored in the UIM is transferred to the memory area of the cellular phone to retain the entire data of the telephone directory. When an access request for accessing the telephone directory is issued, the access time is shortened by accessing the telephone directory in the cellular phone, instead of accessing the telephone directory stored in the UIM.

Even if only the data of the telephone directory is transferred at the time of powering on the cellular phone; however, as the number of registrations in the telephone directory is increased, it will take more time to transfer the entire telephone directory. Also, as the communication rate is lower between the cellular phone and the UIM, the process time will be longer.

The present invention has been made in view of the above drawbacks and provides a communication terminal device capable of accessing telephone directory information retained in a UIM in an efficient manner, an access controlling method in the communication terminal device, and a smart card (also known as IC card).

According to one aspect of the present invention, there is provided a communication terminal device comprising: an external memory medium that includes a data file for storing a first record with given data; and a communication terminal that refers to the data file, wherein the external memory medium comprises: a representative file for storing a second record associated with the first record of the data file; and means for accessing the data file or the representative file in response to a process request issued from the communication terminal, and wherein the communication terminal comprises means for issuing the process request for processing the data file, after designating the representative file.

With such a configuration, the means for accessing of the external memory medium performs the process on the data in the data file, in response to the process request issued from the communication terminal, and then the result is transferred to the communication terminal. This eliminates the necessity of transferring all data in the data file of the external memory medium. Thus, the transfer of unnecessary data is avoided and the file is accessed in an efficient manner.

In the above configuration, the means for issuing may issue a read-out request for reading out record data in the second record of the representative file, the second record being associated with the first record of the data file, the first record corresponding to the data, to be read out, in the data file, and the means for accessing may read out the record data of the second record in the representative file to which the read-out request has been issued.

With such a configuration, when data is read out of the data file, the record data is read out from the record in the representative file associated with the record in the data file corresponding to the data to be read out. This eliminates the necessity of searching the data file for the record to be read out, thereby enabling an efficient access.

In the above configuration, the means for issuing may issue a delete request for deleting record data of the second record in the representative file, the second record corresponding to the data that has been read out from the data file, and the means for accessing may access the first record of the data file, the first record being associated with the second record in the representative file to which the delete request has been issued, deletes record data of the first record, and deletes record data of the second record in the representative file to which the delete request has been issued.

With such a configuration, when the data that has been read out is deleted from the data file, the data is deleted by accessing the record in the data file associated with the record in the representative file to which the delete request has been issued. Then, the record data in the representative file to which the delete request has been issued is deleted, thereby enabling an efficient access.

In the above configuration, the means for issuing may issue a registration request for registering data of the second record of the representative file in the data file, and the means for accessing may store the data which has been requested to be registered, in an empty record in the data file, when the registration request is issued.

With such a configuration, when a new registration is performed on the data file, the data that has been requested to be registered is stored in an empty record in the data file. This allows the storing of the data in the data file with certainty.

According to another aspect of the present invention, there is provided an access controlling method in a communication terminal device having an external memory medium and a communication terminal that refers to the data file, the external memory medium including a data file for storing a first record with given data and a representative file for storing a second record associated with the first record of the data file, the access controlling method comprising: issuing a process request for processing the data file, after designating the representative file, in the communication terminal; and accessing the data file or the representative file in response to the process request issued from the communication terminal, in the external memory medium.

With such a configuration, the process for processing the data in the data file is performed on the external memory medium in response to the process request issued from the communication terminal, and then the result is transferred to the communication terminal. Therefore, it is not necessary to transfer all data in the data file in the external memory medium to the communication terminal. This avoids the transfer of unnecessary data and enables an efficient access to the data file.

According to yet another aspect of the present invention, there is provided a smart card, also known as IC (Integrated Circuit) card, comprising: a data file that stores a first record with given data; a representative file that stores a second record associated with the first record of the data file; and means for accessing the data file or the representative file, in response to a process request for processing the data file into which the second record of the representative file is designated and input.

With such a configuration, on the smart card, the process for processing the data file is performed in response to the process request that has been input. This eliminates the necessity of transferring all data in the data file to the device from which the process request has been issued. The transfer of unnecessary data is avoided and the access to the data file is enabled in an efficient manner.

According to one aspect of the present invention, a process for processing data in a data file is performed on an external memory medium (smart card) in response to a process request issued from a communication terminal. This avoids an unnecessary data transfer to the communication terminal, and enables an efficient access to the data file. In addition, the data quantity transferred between the communication terminal and the external memory medium (smart card) is reduced, thereby shortening the process time for transferring the data and enhancing the usability.

Further objects, advantages and embodiments may be taken from the following description.
FIG. 1 illustrates a configuration of a communication terminal device to which the present invention is applied;
FIG. 2 illustrates a configuration example of a database of telephone directory information of a user identity module (UIM) 2;
FIG. 3 illustrates a configuration of the EF-ADN file included in a representative telephone directory;
FIG. 4 illustrates a sequence diagram of a communication procedure for registering a new entry in a telephone directory;
FIG. 5 illustrates a sequence diagram of the communication procedure for reading out an entry from the telephone directory;
FIG. 6 illustrates a sequence diagram of the communication procedure for updating an entry in the telephone directory;
FIG. 7 illustrates a sequence diagram of the communication procedure for deleting an entry from the telephone directory; and
FIG. 8 another configuration of the EF-ADN file included in a representative telephone directory.

The embodiments of the present invention will now be described with reference to the drawings.

### CONFIGURATION OF COMMUNICATION TERMINAL DEVICE

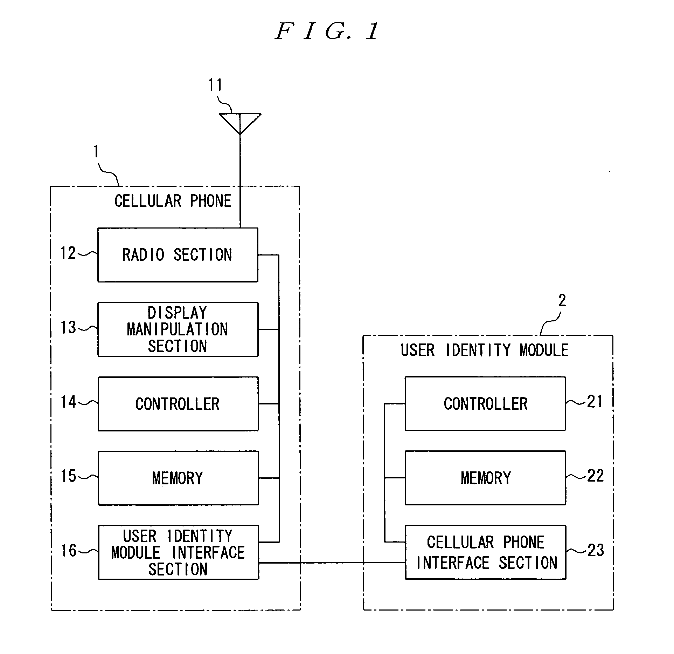

FIG. 1 illustrates a configuration of a communication terminal device to which the present invention is applied. This communication terminal device includes: a cellular phone 1 serving as a communication terminal; and a user identity module (UIM) 2 attachable to the cellular phone 1 and detachable from the cellular phone 1, a communication is established between the cellular phone 1 and the user identity module 2. The user identity module 2 is a smart card, also known as IC card, in compliance with ISO 7816 Standard, such as a SIM or USIM card.

Referring to FIG. 1, the cellular phone 1 includes: an antenna 11 that transmits and receives radio waves; a radio section 12; a display manipulation section 13; a controller 14; a memory 15; and a user identity module interface section 16.

The radio section 12 transmits and receives data with a base transceiver station, not shown, via the antenna 11 by means of radio communication.

The display manipulation section 13 displays the content of a user's input by manipulating keys or a process result in response to the key manipulation.

The controller 14 controls each component of the radio section 12, the display manipulation section 13, the controller 14, and the user identity module interface section 16 according to process programs stored in the memory 15, and establishes a radio communication with a base transceiver station, not shown, by means of the radio section 12, in response to the user's input by manipulating the display manipulation section 13.

The controller 14 communicates with the user identity module 2 via the user identity module interface section 16, reads out a user identity number stored in a memory 22, as will be described later, and provides a cellular phone service, if the user identity number is a valid one. The controller 14 also reads out personal information of a user or telephone directory information, newly registers or updates data, deletes data, and the like, in response to the user's input by manipulating the keys of the display manipulation section 13.

The memory 15 stores the process programs to be performed by the controller 14 or necessary information or the like when a process program is executed.

The user identity module interface section 16 communicates with a cellular phone interface section 23, to be described later, of the user identity module 2, by means of a command interface.

That is to say, the user identity module interface section 16 issues a process request command in accordance with a process request input from the controller 14, and then outputs the command to the user identity module 2. Also, a response command in response to the process request command is input from the user identity module 2 to the user identity module interface section 16, so the user identity module interface section 16 notifies the controller 14 of the response content based upon the response command that has been input.

Meanwhile, the user identity module 2 includes: a controller 21; the memory 22; and the cellular phone interface section 23.

The controller 21 accesses the memory 22 in accordance with the content of the process request input from the cellular phone interface section 23, performs the process in accordance with the content of the process request, and simultaneously notifies the cellular phone interface section 23 of the process result.

The memory 22 stores the process programs to be executed by the controller 21, and in addition, stores information on a telephone directory as information to be stored. The memory 22 also stores the user identity number relating to the cellular phone service as well as personal information of the user himself/herself.

The cellular phone interface section 23 communicates with the user identity module interface section 16 of the cellular phone 1 by means of a command interface, and notifies the controller 21 of the content of the process request in accordance with the process request command to be input from the user identity module interface section 16.

In addition, based upon the result of the process input from the controller 21, executed by the controller 21, and designated by the content of the process request, the cellular phone interface section 23 issues a response command in response to the process request command input from the user identity module interface section 16, and then outputs the command to the user identity module interface section 16.

### CONFIGURATION EXAMPLE OF DATABASE OF TELEPHONE DIRECTORY INFORMATION

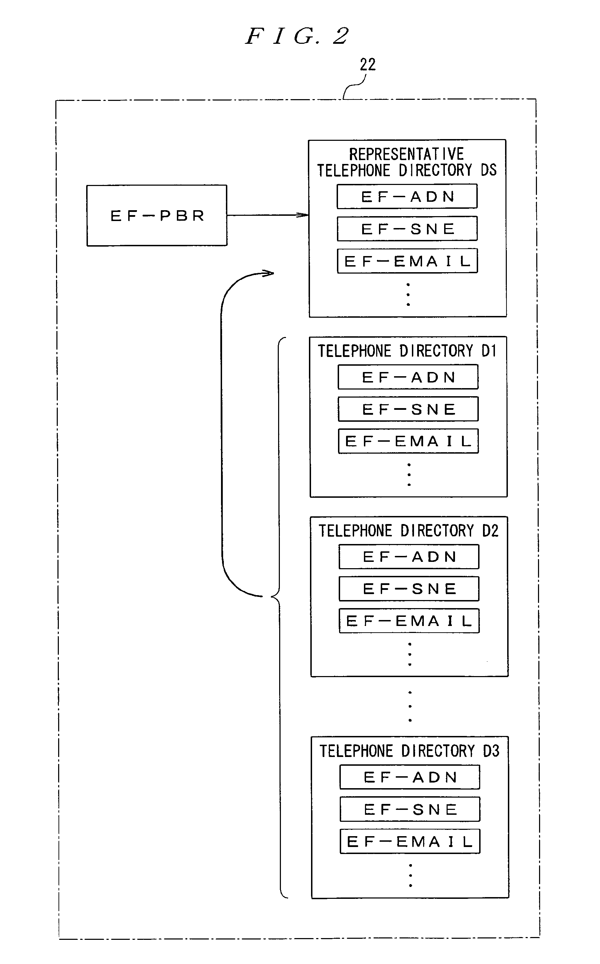

FIG. 2 illustrates a configuration example of a database, including telephone directory information, stored in the memory 22 of the user identity module 2.

The database including the telephone directory information is composed of: multiple telephone directories D1 to DN; a representative telephone directory DS; and an administrative file EF-PBR that administers the telephone directories D1 to DN and the representative telephone directory DS.

When a SIM is employed as the user identity module 2, only a single telephone directory is defined, whereas when a USIM is employed as the user identity module 2, multiple telephone directories are defined. Herein, a description will be given of a case where the USIM is employed as the user identity module 2. Yet, the fundamental concept is applicable to the SIM in the same manner.

The telephone directory D1 includes: an EF-ADN file; an EF-SNE file; and an EF-EMAIL file. Each of the telephone directories D2 through DN is configured in the same manner.

Herein, information constituting a telephone directory, for example, informational elements such as names (reference letters), how to pronounce the names, telephone numbers, e-mail addresses, and the like are divided and recorded in several files.

In accordance with version 31.102 of Technical Specifications (TS) standardized by 3GPP, names and telephone numbers are stored in the EF-ADN file, how to pronounce the names are stored in the EF-SNE file, and the e-mail addresses are stored in the EF-EMAIL file, respectively.

In this description, the names, telephone numbers, how to pronounce the names, e-mail addresses defined as the component elements included in a telephone directory are described as examples. The EF-ADN file, EF-SNE file, and EF-EMAIL file are also described as examples of databases for the telephone directory information. The present invention, however, is not limited to the above examples.

In accordance with 3GPP TS 31.102 as described above, it is possible to define an EF-GRP file that determines which group, among groups such as coworkers, friends, clients, and the like, each entry in a telephone directory belongs to. It is also possible to define other files. The telephone directory information according to one aspect of the present invention is not limited to the case where the database includes the above EF-ADN file, EF-SNE file, and EF-EMAIL file. The database including another file may be applicable to the present invention. In addition, the database including one file or two or more files of the above-described files may also be applicable to the present invention.

The representative telephone directory DS has an identical file configuration to the telephone directories D1 to DN. That is to say, the EF-ADN file for storing the names and the telephone numbers, the EF-SNE file for storing how to pronounce the names, and the EF-EMAIL file for storing the e-mail addresses are included.

The administrative file EF-PBR has telephone directory administrative table information, which defines the configuration of a telephone directory. Examples are what the informational elements constituting the telephone directory are, what file address is applied to each file for storing the above informational elements, and the like. In the administrative file EF-PBR, one record is used for defining one telephone directory (up to 254 entries).

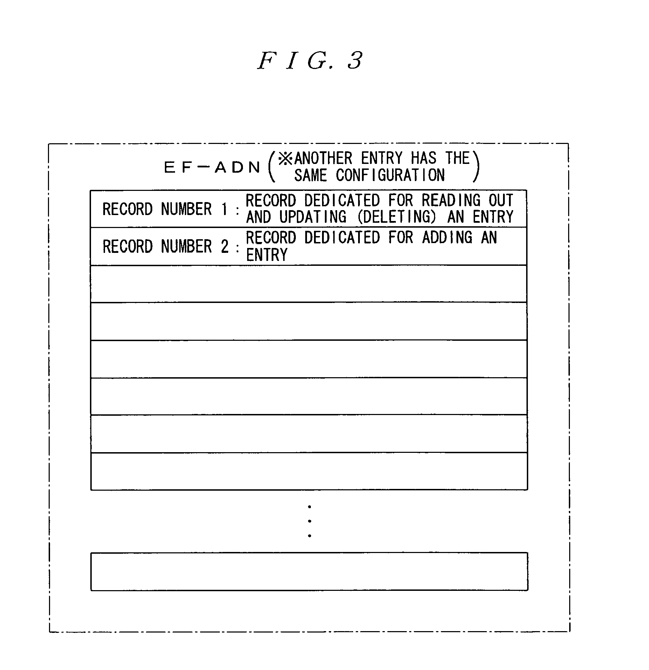

FIG. 3 illustrates the configuration of the EF-ADN file that stores information on telephone numbers included in the database of the representative telephone directory DS. Herein, the EF-SNE file and the EF-EMAIL file have similar configurations.

Referring now to FIG. 3, the EF-ADN file is composed of multiple records. One piece of information in the telephone directory (hereinafter, simply referred to as entry) is stored in one record. Record Number 1 of the EF-ADN file is determined to be a record dedicated for reading out and updating (deleting) an entry. Similarly, Record Number 2 is determined to be a record dedicated for adding an entry, that is, newly registering an entry.

### EXAMPLES OF COMMUNICATION PROCEDURE

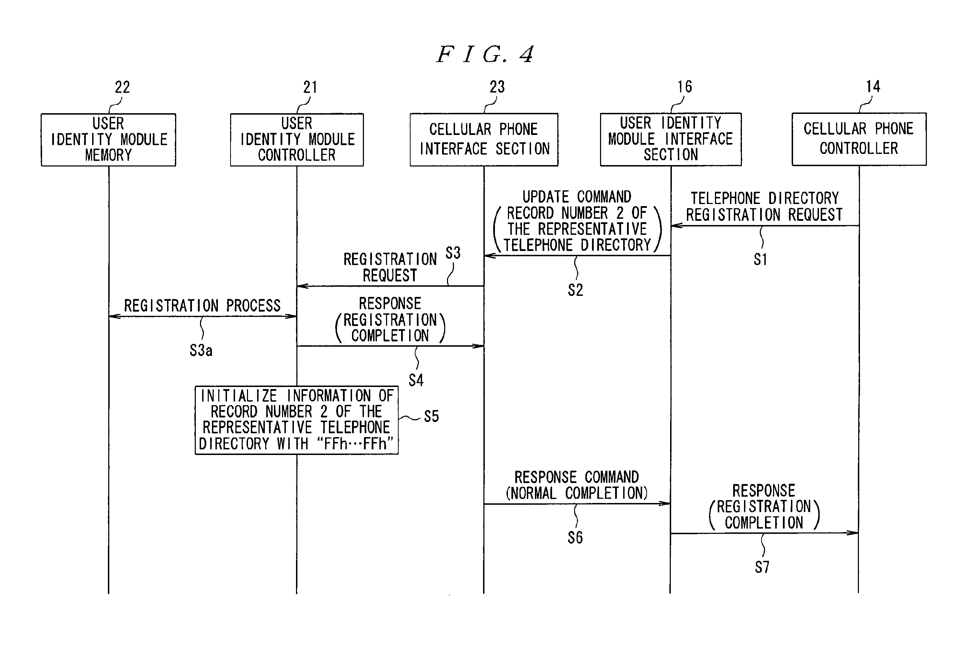

Next, the communication procedure between the cellular phone 1 and the user identity module 2 will be described with reference to sequence diagrams of FIG. 4 to FIG. 7.

### NEW REGISTRATION

Firstly, the communication procedure for a new registration performed from the cellular phone 1 on the telephone directory of the user identity module 2 will be described with reference to the sequence diagram of FIG. 4.

When a user manipulates the cellular phone 1 to perform a new registration in the telephone directory of the cellular phone 1, the manipulated content is notified to the controller 14 through the display manipulation section 13. Upon receipt of the notification, the controller 14 issues a telephone directory registration request for the user identity module interface section 16 (Step S1).

The user identity module interface section 16 issues an UPDATE command as a command for instructing a new registration, and then outputs the command to the user identity module 2 (Step S2). On this occasion, Record Number 2, which is a record dedicated for adding an entry to the representative telephone directory DS, is designated as a new registration destination. New registration information and UPDATE command are output.

When the UPDATE command is input, the cellular phone interface section 23 of the user identity module 2 discriminates that a new registration request has been given because Record Number 2 of the representative telephone directory DS, which is a record dedicated for entry addition, is designated as the new registration destination. Then, a registration request is notified to the controller 21 (Step S3).

The controller 21 performs a registration process after the registration request is issued (Step S3a). In other words, since Record Number 2 of the representative telephone directory DS is designated as the new registration destination, the new registration information that has been input is temporarily stored in Record Number 2.

Subsequently, the controller 21 searches each file of the telephone directories D1 through DN for an empty record for storing the new registration information. For example, the controller 21 searches each file of the telephone directory D1 for an empty record. If there is no empty record, the controller 21 then searches the telephone directory D2. The controller 21 searches each file for an empty record.

Then, the new registration information stored in Record Number 2 of the representative telephone directory DS is stored in the empty record that has been searched for. Specifically, a name (reference letters) and a telephone number, which are designated as the new registration information, are stored in the empty record of the EF-ADN file. How to pronounce the name is stored in the empty record in the EF-SNE file. The e-mail address is stored in the empty record of the EF-EMAIL file.

This enables the new registration information, the registration request of which has been issued, to be stored in any of the telephone directories in which the empty record is searched for.

Subsequently, the controller 21 notifies the cellular phone interface section 23 that the registration has been completed (Step S4), and then initializes Record Number 2 of the representative telephone directory DS (Step S5). In this manner, the new registration information temporarily stored in Record Number 2 is deleted.

The cellular phone interface section 23 issues a response command of normal completion, and then outputs the command to the cellular phone 1 (Step S6).

Upon receipt of the response command of normal completion, the user identity module interface section 16 of the cellular phone 1 notifies the controller 14 of the registration completion (Step S7). This makes the controller 14 acknowledge that the new registration has been completed normally.

The initialization process of Record Number 2 of the representative telephone directory DS may be any process for updating and storing Record Number 2 with a data sequence used for initialization like "FFh ... FFh". Alternatively, if an unused flag is provided for indicating whether or not the record is unused, the initialization process may be performed by changing the flag to indicate "unused". Further alternatively, the initialization process may be performed by both updating and storing Record Number 2 with a data sequence used for initialization and changing the flag to indicate "unused".

In the above description, after the new registration information is temporarily stored in the representative telephone directory DS, the new registration information is stored in the telephone directory. However, the present invention is not limited to this case.

As another example, without storing the new registration information in the representative telephone directory DS, an empty record may be searched for in the telephone directory with the new registration information being temporarily stored in a buffer area or the like, not shown, in which the request command to be input is temporarily stored, arranged in the cellular phone interface section 23. The new registration information stored in the buffer area may be directly written into the empty record that has been searched for. In this case, the new registration information is not stored in Record Number 2 of the representative telephone directory DS, thereby eliminating the initialization process of Record Number 2 of the representative telephone directory DS.

### READING OUT OF REGISTRATION INFORMATION

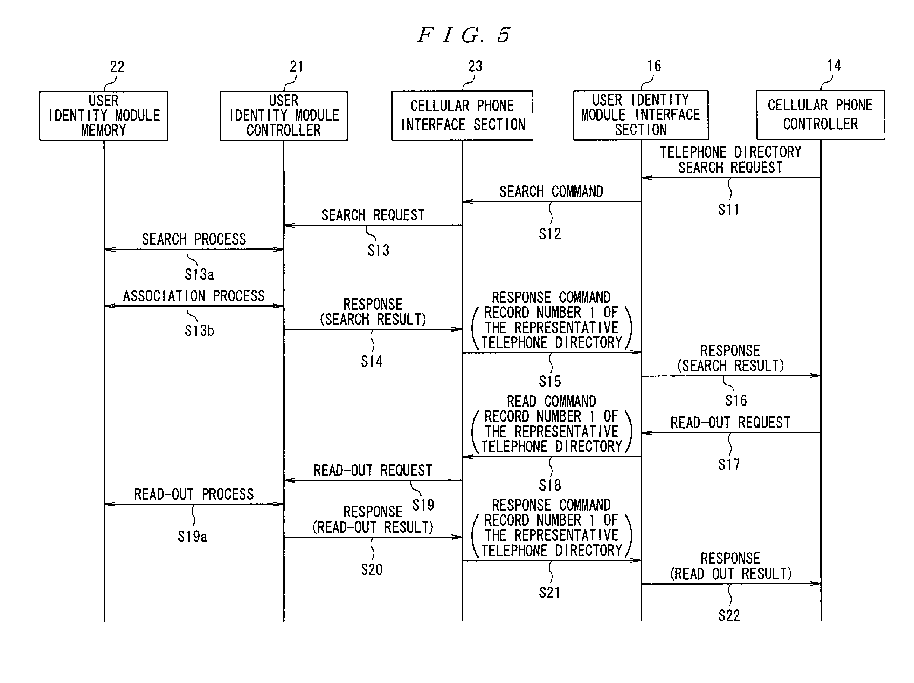

Next, the communication procedure of reading out the registration information of a desired registration record from a telephone directory will be described, with reference to the sequence diagram of FIG. 5.

When a user manipulates the cellular phone 1 to read out a registered record X, the manipulation content is notified to the controller 14 through the display manipulation section 13. The controller 14, in response to the notification, issues a search request, for the user identity module interface section 16, of the registered record X that has been designated as a target record to be read out (Step S11).

Upon receipt of the request, the user identity module interface section 16 issues a SEARCH command as a command for instructing a search, and outputs the SEARCH command to the user identity module 2 (Step S12). In addition to the SEARCH command, information designating the registered record X to be searched for, which is search information, such as a name, reference letters, or the like.

The cellular phone interface section 23 of the user identity module 2 notifies the controller 21 that the search request for the registered record X has been issued, based upon the SEARCH command that has been input (Step S13). The controller 21 searches for the registered record X (Step S13a). Specifically, the record corresponding to the search information (registered record X) that has been designated is searched for in each file, from the telephone directory D1, in sequence, for example.

When the corresponding record is found, the record is associated with Record Number 1 dedicated for reading out and updating (deleting) an entry of the representative telephone directory DS, and simultaneously record data of these records are matched (Step S13b). For example, by copying the record data corresponding to the registered record X in each file as a record datum of Record Number 1 of the representative telephone directory DS, these data are associated with each other and the record data of these records are matched with each other.

The method of associating Record Number 1 of the representative telephone directory DS with the record that has been searched for is not limited to this method. As another example, association information indicating that Record Number 1 is associated with the record in each file corresponding to the registered record X may be stored in Record Number 1 of the representative telephone directory DS. When the association information is stored in Record Number 1 of the representative telephone directory DS, the record in the telephone directory specified by the association information is accessed. Thus, Record Number 1 of the representative telephone directory DS and the record that has been searched for may be associated with each other, so the record data of these records may be matched with each other.

Subsequently, the controller 21 finishes searching, and notifies the cellular phone interface section 23 that the search result has been stored in Record Number 1 of the representative telephone directory DS (Step S14). The cellular phone interface section 23 issues a response command for notifying that the search is completed normally, and outputs to the cellular phone 1 the response command together with the notification that the search result is stored in Record Number 1 of the representative telephone directory DS (Step S15).

The user identity module interface section 16 of the cellular phone 1 notifies the controller 14 that the search has been completed normally, based upon the response command to be input (Step S16).

The controller 14 issues a read-out request for the user identity module interface section 16, when acknowledging that the search process is completed normally (Step S17).

The user identity module interface section 16 issues a READ command for instructing reading out, and outputs the command to the user identity module 2. At this time, the user identity module interface section 16 designates Record Number 1 of the representative telephone directory DS that has been notified by the response command for responding to the search request, as a read-out destination to output the READ command to (Step S18).

The cellular phone interface section 23 of the user identity module 2 notifies the controller 21 that the read-out request for reading out Record Number 1 of the representative telephone directory DS has been issued, based upon the READ command that has been input (Step S19). The controller 21 performs a read-out process (Step S19a). Specifically, the controller 21 reads out the record data from Record Number 1 of each file of the representative telephone directory DS that has been designated, and then notifies the cellular phone interface section 23 as a read-out result (Step S20).

The cellular phone interface section 23 outputs to the cellular phone 1 the record data of Record Number 1 of the representative telephone directory DS as a response command for responding to the READ command (Step S21).

The user identity module interface section 16 of the cellular phone 1 notifies the controller 14 of the record data of Record Number 1 of the representative telephone directory DS as a read-out result, based upon the response command that has been input (Step S22). The controller 14 acquires the record data of Record Number 1 in each file of the representative telephone directory DS.

Record Number 1 in each file of the representative telephone directory DS stores the record data of the registered record X, which has been searched for at Step S13, and which has been designated as the target record to be read out. Therefore, the controller 14 acquires the record data of the registered record X that has been designated as the target record to be read out.

Also, the registration information of the registered record X that has been read out is displayed on a display section by the display manipulation section 13. This makes the registration information of the registered record X available to the user, who requested the reading out of the record.

### UPDATE OF REGISTRATION INFORMATION

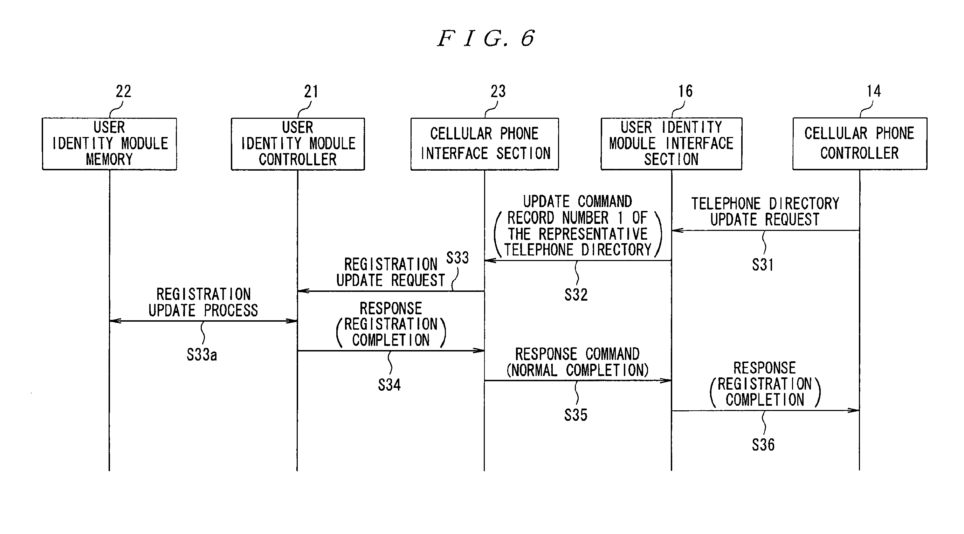

The communication procedure of updating the registration information of the registered record X that has been read out will now be described with reference to the sequence diagram of FIG. 6.

Herein, at this moment, the record data of the registered record X is stored in Record Number 1 in each file of the representative telephone directory DS.

When a user manipulates for an update of the registered record X that has been read out, the controller 14 of the cellular phone 1 issues an update request, for the user identity module interface section 16, of the telephone directory of the registered record X that has been read out (Step S31).

The user identity module interface section 16 issues an UPDATE command for instructing an update of the registration information, and then outputs the command to the user identity module 2. At this point of time, the user identity module interface section 16 designates Record Number 1 of the representative telephone directory DS that is dedicated for reading out and updating (deleting) an entry, as a target record to be updated, and then outputs the UPDATE command (Step S32).

When the UPDATE command is input, the cellular phone interface section 23 of the user identity module 2 notifies the controller 21 of an update request of the registration information (Step S33), the controller 21 performs the update process (Step S33a).

In other words, the controller 21 updates the record data of Record Number 1 of the representative telephone directory DS that has been designated as the target record to be updated, with data designated by the UPDATE command. In addition, the record data, after the update, in Record Number 1 of the representative telephone directory DS is copied to a record associated with Record Number 1 of the representative telephone directory DS, namely the records in the telephone directories in the registered record X is stored, so that the record data of the registered record X of the telephone directories match the record data of Record Number 1 of the representative telephone directory DS. In this manner, the information on the telephone directory relating to the registered record X is updated.

When the update process is completed normally, the controller 21 notifies the cellular phone interface section 23 of the registration completion (Step S34). The cellular phone interface section 23 issues a response command for notifying the normal completion in response to the UPDATE command, and then outputs the command to the cellular phone 1 (Step S35).

The user identity module interface section 16 of the cellular phone 1 acknowledges the normal completion of the update process based upon the response command that has been input, and then notifies the controller 14 of the normal completion (Step S36). This makes the controller 14 acknowledge the normal completion of the update of the registration information of the registered record X.

### DELETION OF REGISTRATION INFORMATION

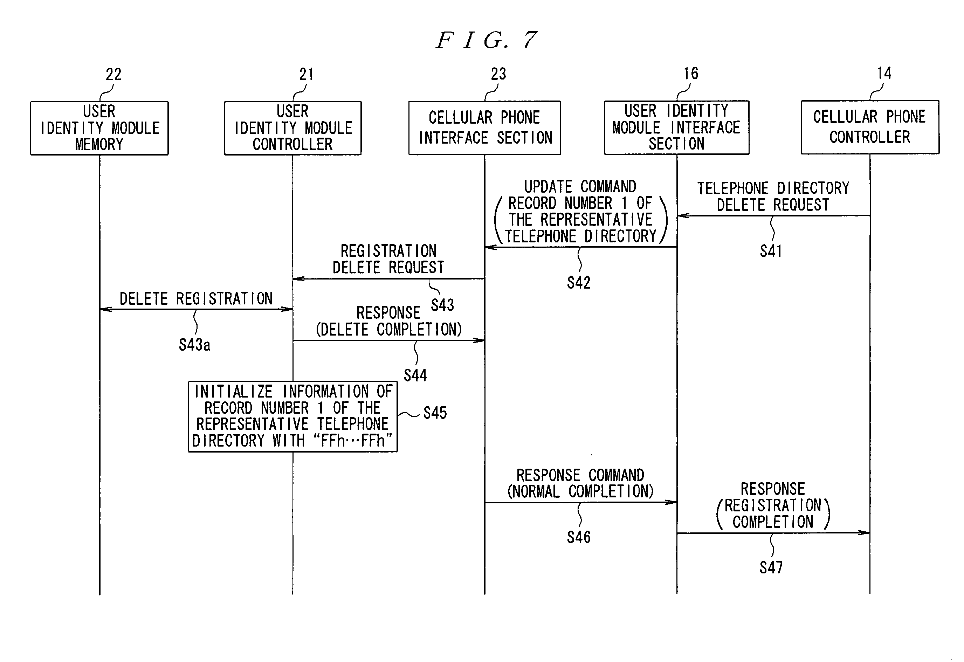

Meanwhile, in order to delete the registered record X that has been read out as described above from the telephone directory, the communication procedure will be performed with reference to the sequence diagram of FIG. 7.

When a user manipulates for deleting the registered record X corresponding to the registration information of the registered record X that has been read out, the controller 14 of the cellular phone 1 issues a delete request, for the user identity module interface section 16, of deleting the registration information of the registered record X that has been read out from the telephone directory (Step S41).

The user identity module interface section 16 issues an UPDATE command for instructing a deletion of the registration information, and then outputs the command to the user identity module 2. Specifically, the user identity module interface section 16 designates Record Number 1 in the representative telephone directory DS that is dedicated for reading out and updating (deleting), as a record for deleting a target record, issuing the UPDATE command, and then outputting the command to the user identity module 2. Also, the data sequence for initializing Record Number 1 such as, for example, sequential data of "FFh ... FFh" is designated as update data (Step S42).

Also in this case, if there is provided a flag indicating whether or not Record Number 1 is unused, the initialization may be performed by changing the unused flag to indicate an unused state.

When the UPDATE command is input, the cellular phone interface section 23 of the user identity module 2 notifies the controller 21 of the update (delete) request of the registration information (Step S43). The controller 21 performs the update (deletion) process (Step S43a).

That is to say, since the initialization data is configured to be the update data of the UPDATE command, the controller 21 specifies the record in the file for storing the registered record X associated with the update data from Record Number 1 of the representative telephone directory DS. The record data of the specified record is updated and the initialization data is set. Thus, the record of the registered record X is initialized, in other words, the registered record X has been deleted from the telephone directory.

Additionally, the controller 21 notifies the cellular phone interface section 23 that the registered record X has been deleted from the telephone directory (Step S44), and simultaneously, initializes Record Number 1 of the representative telephone directory DS. That is, the data sequence for information initialization such as, for example, "FFh ...FFh" is stored.

In this manner, Record Number 1 of the representative telephone directory DS is initialized. Specifically, the record data of Record Number 1 of the representative telephone directory DS is deleted, and at the same time, the association of Record Number 1 of the representative telephone directory DS with the record in the telephone directory are released (Step S45).

Since the completion of the deletion of the registered record X is notified, the cellular phone interface section 23 issues a response command for notifying that the deletion has been completed normally in response to the delete request command, and then outputs the command to the cellular phone 1 (Step S46).

The user identity module interface section 16 of the cellular phone 1 notifies the controller 14 of the completion of the deletion, based upon the response command that has been input (Step S47). This makes the controller 14 acknowledge the deletion of the registered record X normally.

### SUMMARIZATION

As described heretofore, according to one embodiment of the present invention, an access to the telephone directory is achieved in an efficient manner without transferring the telephone directory information of the user identity module 2 to the cellular phone 1 at the time of powering on the cellular phone 1. Even if the cellular phone 1 with a relatively low security function, as compared to the user identity module 2, is used, the risk that the telephone directory information is read out by a third party is reduced and the security function is enhanced.

In addition, the information transmitted and received between the cellular phone 1 and the user identity module 2 includes the registration information of a record, a process request of which has been issued or command data. Its information quantity is smaller than that used for reading out the registration information of all records registered in the telephone directories. For this reason, even if the communication rate between the cellular phone 1 and the user identity module 2 is low, the degradation of its usability is suppressed.

Furthermore, the command interface in compliance with ISO 7816 Standard has conventionally been employed as a communication method between the cellular phone 1 and the user identity module 2. As described above; however, according to one aspect of the present invention, the communication between the cellular phone 1 and the user identity module 2 is also achieved by means of a command interface. Thus, the same command interface can be utilized in the conventional type of the cellular phone 1 that communicates with the user identity module 2 by means of the command interface in compliance with ISO 7816 Standard, without requiring a significant change.

Moreover, the user identity module 2 is provided with the representative telephone directory DS so as to associate each record in the representative telephone directory DS with the record corresponding to the registered record, the process request of which has been given.

When the processes of reading out data, updating data and deleting data of an identical registered record are successively executed, the representative telephone directory DS is accessed. This eliminates the need for searching the telephone directory for the corresponding record every time. Accordingly, it is possible to save steps for searching for the corresponding record that is a target record. It is also possible to shorten the access time for accessing the telephone directories.

In the representative telephone directory DS, Record Number 1 is dedicated for reading out and updating (deleting) an entry, and Record Number 2 is defined for adding a new entry. Therefore, the cellular phone 1 discriminates whether the content of the process to be requested is reading out, updating, or deleting an entry, thereby setting an access destination in the representative telephone directory DS with ease.

### ACCESS CONTROLLING METHOD

In the above communication terminal device, the following access controlling method is employed.

Specifically, an access controlling method in a communication terminal device having an external memory medium and a communication terminal that refers to the data file, the external memory medium including a data file for storing a first record with given data and a representative file for storing a second record associated with the first record of the data file, the access controlling method comprising: issuing a process request for processing the data file, after designating the representative file, in the communication terminal, when the record that is requested to be processed is associated with the representative file (examples are Step S2 of FIG. 4, Step S12 and Step S18 of FIG. 5, Step S32 of FIG. 6, and Step S42 of FIG. 7 ); and accessing the data file or the representative file in response to the process request issued from the communication terminal, in the external memory medium (examples are Step S3a of FIG. 4, Step S13a and Step S19a of FIG. 5, Step S33a of FIG. 6, and Step S43a of FIG. 7).

According to the above method, the processing on the data in a data file is performed on an external memory medium in response to a process request from a communication terminal, and then the result is transferred to the communication terminal. For this reason, it is not necessary to transfer all the data in the data file of the external memory medium, thereby avoiding the transfer of unnecessary data and enabling an access to the data file in an efficient manner.

### MODIFICATION 1

In the embodiments described heretofore, only telephone directory administrative table information is stored in the administrative file EF-PBR. However, not only the telephone directory administrative table information of the representative telephone directory DS but also that of all telephone directories arranged in the database of the telephone directory may be registered in the administrative file EF-PBR.

In this manner, the telephone directory administrative table information of all telephone directories is registered in the administrative file EF-PBR, thereby allowing an access to each telephone directory of the user identity module 2 between the conventional cellular phone 1 and the user identity module 2, by means of a communication procedure for the command interface in compliance with ISO 7816 Standard. In other words, all information on the telephone directory of the user identity module 2 is read out to the cellular phone 1, so that the update or the like of the registered information is enabled by the cellular phone 1.

Accordingly, it is possible to achieve both of the method for accessing the telephone directory by means of the communication procedure for the command interface in compliance with the conventional ISO 7816 Standard, and the method for accessing the telephone directory by means of the above-described representative telephone directory DS. It is also possible to access the telephone directory by means of the conventional communication procedure, even if the user identity module 2 is not provided with the representative telephone directory DS. This improves the usability, accordingly.

### MODIFICATION 2

In the embodiments described heretofore, one record is set to be dedicated for reading out and updating (deleting) an entry. Likewise, one record is set to be dedicated for registering a new entry. The case where one entry is processed each time has been described. However, the present invention is not limited to this case.

The present invention may be applicable to, for example, a case where multiple registered records are processed together, such as a case where the registered records having a direction word of "A" are read out. In this case, multiple records, for example, Record Numbers 1 to 10, may be defined and dedicated for reading out and updating (deleting) entries. Likewise, multiple records, for example, Record Numbers 11 to 20, may be defined and dedicated for new registration.

As described above, the present invention is applicable to the case where multiple registered records are processed simultaneously, such as the case where all the registered records having a direction word of "A" are read out, by defining multiple records as records dedicated for reading out, updating (deleting), and newly registering entries.

In such a case, for example, when the registered information of any one of the multiple registered records that have been read out is updated, the information corresponding to the registered record to be updated is stored in any one of the records for reading out, updating, and deleting multiple entries in the representative telephone directory DS.

Accordingly, association information of the record in the telephone directory corresponding to the registered record to be updated that is associated with the record in the representative telephone directory is stored in the cellular phone 1. The record in the representative telephone directory corresponding to the registered record X that should be updated may be specified by the association information. The record in the representative telephone directory may be identified so that an update request command for the registered record that should be updated may be output.

Alternatively, the user identity module 2 may search multiple records dedicated for reading out, updating and deleing entries in the representative telephone directory, for the registered record specified as the record that should be updated, so that the processing is performed on the corresponding record.

### MODIFICATION 3

In the embodiments described heretofore, the description has been given of the case where the communication terminal device in which the cellular phone 1 and the user identity module 2 communicate by means of the command interface in compliance with ISO 7816 Standard. The present invention is not limited to this case.

As another example, the present invention may be applicable to the cellular phone 1 on which a high-rate interface is mounted by use of the USB technology or the like, whereby the cellular phone 1 and the user identity module 2 are communicable by means of a high-rate interface.

In this case, when the user identity module 2 attached to the cellular phone 1 is provided with the representative telephone directory DS, the access to the telephone directory is enabled promptly by communicating by means of the command interface via the representative telephone directory DS. On the other hand, when the user identity module 2 is compatible with a high-rate interface, the access to the telephone directory is enabled promptly by performing the communication by means of the high-rate interface.

The user identity module 2 that is not provided with the representative telephone directory DS is also allowed to access each of telephone directories in the similar manner to the conventional one. It is therefore possible to communicate in an efficient manner by means of the communication procedure suitable for the user identity module 2, according to the case where the user identity module 2 is compatible to the high-rate interface, the case where the user identity module 2 is capable of communicating via the representative telephone directory DS, or the case where the user identity module 2 does not correspond to any one of the above cases.

### MODIFICATION 4

In the embodiments described heretofore, the description has been given of the case where Record Number 1 is dedicated for reading out and updating (deleting) an entry and Record Number 2 is dedicated for adding an entry. However, the present invention is not limited to this case.

As another example, an empty area in the representative telephone directory DS may be searched for when the process request is issued, and then the empty area and the record to be processed may be associated with each other.

In this case, when a read-out request is issued, any one of the records in the representative telephone directory DS and the record to be read out are associated with each other, and then its response command is notified to the user identity module interface section 16, the association information of the record in the representative telephone directory DS and the record to be read out are retained in the user identity module interface section 16.

Subsequently, when the read-out request for reading out the record to be processed is issued from the controller 14, the user identity module interface section 16 may specify the record in the representative telephone directory DS corresponding to the record to be read out, based upon the association information retained in the user identity module interface section 16. The record in the representative telephone directory DS that has been specified may be designated and a READ command may be issued.

### MODIFICATION 5

In the embodiments described heretofore, the description has been given of the case where Record Number 1 is dedicated for reading our or updating (deleting) an entry and Record Number 2 is dedicated for adding a new entry in the representative telephone directory DS. However, the present invention is not limited to this case.

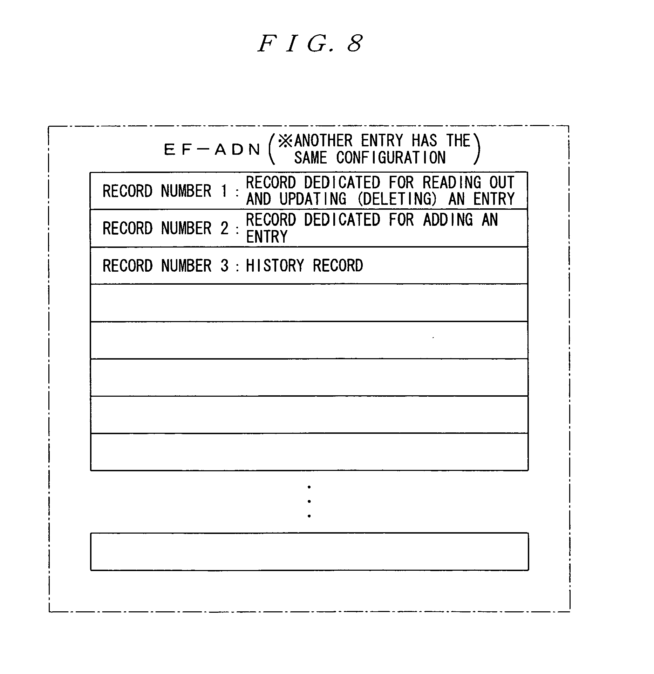

As another example, referring now to FIG. 8, a given number of records in Record Number 3 or later may be defined for history records, so that a given pieces of information from the latest one among the entries temporarily stored in Record Number 1 or Record Number 2 can be stored.

In this case, when Record Number 1 is initialized after the access to Record Number 1 in the representative telephone directory DS in accordance with the reading out or deletion is completed, or when Record Number 2 is initialized after the access to Record Number 2 in the representative telephone directory DS in accordance with the new registration is completed, the record associated with Record Number1 or Record Number 2 is associated with, for example, Record Number 3 for storing the latest history, before the initialization. Then, the association information representing the above relationship is registered in Record Number 3. The record associated with Record Number 1 is changed to be associated from Record Number 2 to Record Number 3. Subsequently, these records are initialized.

Next, when Record Number 1 or Record Number 2 is newly associated, the information associated with Record Number 3 is moved to Record Number 4 and the new association information of Record Number 1 or Record Number 2 is stored in Record Number 3 that is now an empty record. After that, whenever Record Number 1 or Record Number 2 is newly associated, the above procedure is performed in a similar manner. Record Number 3 is configured as the latest history record and a given number of records of history are stored in Record Number 3 or later.

In a state where an history record is registered in the representative telephone directory DS, when there is a request for reading out, updating, or deleting a registered record, the cellular phone interface section 23 firstly searches the history record in the representative telephone directory DS. When the registered entry to be processed and designated by the process request command is stored in the history record, the record corresponding to the registered record to be processed is changed from the history record to Record Number 1. Alternatively, the corresponding history record may be associated with Record Number 1.

In such a configuration, the user identity module 2 is capable of acquiring the registration information corresponding to the desired registered record from the history records having a relatively smaller numbers of records, instead of searching the registration information corresponding to the desired registered record from a relatively large number of pieces of telephone directory information. The process time is shortened, accordingly.

### MODIFICATION 6

In the embodiments described heretofore, the description has been given of the case where the cellular phone 1 is used as a communication terminal. However, the present invention is not limited to this case. Any communication terminal configured to communicate other than verbal communication may be applicable.

In addition, in the embodiments described heretofore, the description has been given of the case where the telephone directory is used as a data file. However, the present invention is not limited to this case. Any database which is stored in the user identity module 2 or any piece of data which is accessed from the cellular phone 1 may be applicable.

While the preferred embodiments of the present invention have been illustrated in detail, it should be apparent that modifications and adaptations to those embodiments may occur to one skilled in the art without departing from the scope of the present invention as set forth in the following claims.

The entire disclosure of Japanese Patent Application No. 2007-302556 filed on November 22, 2007 including specification, claims, drawings, and abstract is incorporated herein by reference in its entirety.

## Claims

1. A communication terminal device comprising:
an external memory medium (2) that includes a data file for storing a first record with given data; and
a communication terminal (1) that refers to the data file,
wherein the external memory medium (2) comprises:
a representative file for storing a second record associated with the first record of the data file; and
means (21) for accessing the data file or the representative file in response to a process request issued from the communication terminal (1), and
wherein the communication terminal (1) comprises means (16) for issuing the process request for processing the data file, after designating the representative file.

2. The communication terminal device according to claim 2, wherein:
the means (16) for issuing issues a read-out request for reading out record data in the second record of the representative file, the second record being associated with the first record of the data file, the first record corresponding to the data, to be read out, in the data file, and
the means (21) for accessing reads out the record data of the second record in the representative file to which the read-out request has been issued.

3. The communication terminal device according to claim 1 or 2, wherein:
the means (16) for issuing issues a delete request for deleting record data of the second record in the representative file, the second record corresponding to the data that has been read out from the data file, and
the means (21) for accessing accesses the first record of the data file, the first record being associated with the second record in the representative file to which the delete request has been issued, deletes record data of the first record, and deletes record data of the second record in the representative file to which the delete request has been issued.

4. The communication terminal device according to any one of claims 1 to 3, wherein:
the means (16) for issuing issues a registration request for registering data of the second record of the representative file in the data file, and
the means (21) for accessing stores the data which has been requested to be registered, in an empty record in the data file, when the registration request is issued.

5. An access controlling method in a communication terminal device having an external memory medium (2) and a communication terminal (1) that refers to the data file, the external memory medium (2) including a data file for storing a first record with given data and a representative file for storing a second record associated with the first record of the data file, the access controlling method comprising:
issuing a process request for processing the data file, after designating the representative file, in the communication terminal (1); and
accessing the data file or the representative file in response to the process request issued from the communication terminal (1), in the external memory medium (2).

6. A smart card comprising:
a data file that stores a first record with given data;
a representative file that stores a second record associated with the first record of the data file; and
means (21) for accessing the data file or the representative file, in response to a process request for processing the data file into which the second record of the representative file is designated and input.
